(19) Europäisches Patentamt
European Patent Office
Office européen des brevets

(11) EP 2 642 493 A1

(12) EUROPEAN PATENT APPLICATION
published in accordance with Art. 153(4) EPC

(43) Date of publication:
**25.09.2013 Bulletin 2013/39**

(21) Application number: **11840854.1**

(22) Date of filing: **16.11.2011**

(51) Int Cl.:
***H01B 13/00*** *(2006.01)* ***C08F 259/08*** *(2006.01)*
***C08J 5/22*** *(2006.01)* ***H01B 1/06*** *(2006.01)*
***H01M 8/02*** *(2006.01)* ***H01M 8/10*** *(2006.01)*

(86) International application number:
**PCT/JP2011/006371**

(87) International publication number:
**WO 2012/066773 (24.05.2012 Gazette 2012/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.11.2010 JP 2010255907**

(71) Applicants:
- **Nitto Denko Corporation**
  **Ibaraki-shi, Osaka 567-8680 (JP)**
- **Japan Atomic Energy Agency**
  **Naka-gun,**
  **Ibaraki 319-1184 (JP)**

(72) Inventors:
- **EMORI, Hideyuki**
  **Ibaraki-shi**
  **Osaka 567-8680 (JP)**
- **SUZUKI, Hirose**
  **Ibaraki-shi**
  **Osaka 567-8680 (JP)**
- **ASANO, Masaharu**
  **Takasaki-shi**
  **Gunma 370-1292 (JP)**
- **MAEKAWA, Yasunari**
  **Takasaki-shi**
  **Gunma 370-1292 (JP)**

(74) Representative: **Hart-Davis, Jason et al**
**Cabinet Beau de Loménie**
**158, rue de l'Université**
**75340 Paris Cedex 07 (FR)**

# (54) PROTON-CONDUCTIVE POLYMER ELECTROLYTE FILM HAVING EXCELLENT OXIDATION RESISTANCE, AND PROCESS FOR PRODUCTION THEREOF

(57) The process for producing a proton conductive polymer electrolyte membrane of the present invention includes the steps of: irradiating resin fine particles with radiation; graft-polymerizing a vinyl monomer having a sulfonic acid group precursor and a vinyl monomer having a carbonyl group equivalent with the resin fine particles in a solid-liquid two-phase system to obtain a finely particulate graft polymer; preparing a casting solution of a polymer having a phosphoric acid group or a phosphonic acid group and the graft polymer, and forming a cast membrane from this solution; drying the cast membrane to obtain a film; converting the sulfonic acid group precursor into a sulfonic acid group; and forming a crosslinked structure between the carbonyl group equivalents. In the solid-liquid two-phase system, a liquid phase includes the vinyl monomers and a solvent for the monomers, and a solid phase includes the resin fine particles. By this process, a proton conductive polymer electrolyte membrane having high oxidation resistance, and a process capable of producing this membrane industrially are provided.

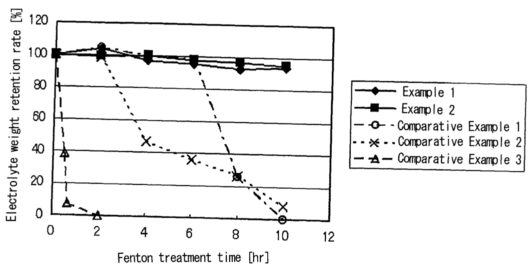


Fig. 1

EP 2 642 493 A1

**Description**

TECHNICAL FIELD

The present invention relates to a proton conductive polymer electrolyte membrane that can be used in various applications such as polymer electrolyte fuel cells, electrolytic cells and humidification modules, and to a process for producing the membrane. More specifically, the present invention relates to a process for producing a proton conductive polymer electrolyte membrane, in which graft polymerization with irradiation is carried out on a resin material and an introduction of a crosslinked structure is further carried out, and to a proton conductive polymer electrolyte membrane produced by this process.

BACKGROUND ART

Polymer electrolyte membranes having proton conductivity are used in polymer electrolyte fuel cells (PEFCs), alkaline electrolytic cells, gas (for example, air) humidification modules, etc. In particular, their use as electrolyte membranes for PEFCs has attracted attention. Fuel cells are clean sources of electrical energy using hydrogen or methanol as a fuel and having high theoretical power generation efficiency. Fuel cells are expected to be the next generation power generation methods, and are under active development as various power sources such as power sources for home cogeneration systems, power sources for mobile devices, power sources for electric vehicles, and simplified auxiliary power sources.

An electrolyte membrane of a PEFC needs to function as an electrolyte for conducting protons and as a member for separating a fuel to be supplied to the anode from an oxidant to be supplied to the cathode. For these purposes, the electrolyte membrane of the PEFC is required to have high ion exchange capacity, proton conductivity, electrochemical stability and mechanical strength, as well as low electrical resistance, fuel (for example, hydrogen, methanol) permeability and oxidant gas (for example, oxygen) permeability.

As proton conductive polymer electrolyte membranes, perfluoroalkyl ether sulfonic acid polymers (PFSA polymers) typified by "Nafion" (registered trademark of DuPont) are frequently used. However, PFSA polymers are expensive because their production process is complicated. In addition, the mechanical strength of PFSA polymers is low in a high temperature range of 100°C or higher. Moreover, PFSA polymers have high methanol permeability, which makes it difficult to use them in direct methanol fuel cells (DMFCs) using a methanol-containing solution as a fuel.

Alternative polymers to PFSA polymers are being studied. From the viewpoint of electrochemical stability, polymers in which many fluorine atoms are bonded are preferred. From the viewpoints of ion exchange capacity and proton conductivity, polymers into which many proton conductive groups such as sulfonic acid groups and phosphoric acid groups are introduced are preferred.

JP 2004-59752 A (Patent Literature 1) discloses a polymer electrolyte membrane obtained by irradiating a film made of ethylene-tetrafluoroethylene copolymer or polyvinylidene fluoride with radiation, immersing this film in a solution containing a styrene-based compound as a monomer to allow graft polymerization to proceed, and sulfonating phenyl groups contained in the formed graft chains. The polymer electrolyte membrane of JP 2004-59752 A is suitable for use in a PEFC because it has low permeability to hydrogen and methanol. However, since the reaction rate of graft polymerization is generally low, a film-shaped resin material must be subjected to treatment for a very long time in the production process disclosed in JP 2004-59752 A. Therefore, the industrial productivity of this production process is low, although this is a simple and rational process for small-scale production. In order to produce the polymer electrolyte membrane continuously on an industrial scale by the above production process, huge facilities are needed for sequential treatment of large size films. If the dose of radiation is increased to enhance the reactivity in the graft polymerization, side reactions other than the graft polymerization proceed in parallel to produce homopolymers, resulting in gelation of the reaction solution in a short time. If a polymerization inhibitor is added to the reaction solution to prevent this gelation, graft chains are unevenly distributed on the surface of the film, and thereby sufficient power generation characteristics cannot be obtained when the film is used as an electrolyte membrane for a fuel cell.

JP 2005-525682 T (Patent Literature 2) discloses a process for producing a polymer electrolyte membrane by irradiating a resin material powder with radiation, dissolving both the irradiated powder and a vinyl monomer having a sulfonic acid group or a phosphonic acid group in a solvent to allow graft polymerization to proceed, casting the obtained polymer solution into a film, and drying the film. This literature describes that it is preferable to dissolve the irradiated resin powder and the above vinyl monomer in a solvent to produce a homogeneous solution, and to use dimethylacetamide, N-methylpyrrolidone, dimethylformamide, or dimethyl sulfoxide (DMSO) as the solvent. This literature does not present any specific examples. Therefore, it is not easy even for a person skilled in the art to understand all the details necessary to carry out the invention described in this literature. However, according to studies made by the present inventors, when a homogeneous solution is formed using a solvent in which both an irradiated resin material and a monomer are dissolved, radicals once formed in the resin material by irradiation transfer to the solvent rapidly and

disappear, and therefore it is difficult in practice to carry out graft polymerization.

JP 2004-79252 A (Patent Literature 3) discloses a polymer electrolyte membrane obtained from a composition containing a polymer having a sulfonic acid group and an added polymer having a phosphoric acid group. However, studies made by the present inventors have revealed that when the electrolyte membrane of JP 2004-79252 A is exposed to conditions that require oxidation resistance, the decomposition of the electrolyte components proceeds from the very early stage, which reduces the proton conductivity of the electrolyte membrane. That is, a polymer electrolyte membrane having sufficient oxidation resistance cannot be obtained only by adding a component having a phosphoric acid group as disclosed in JP 2004-79252 A.

## CITATION LIST

### Patent Literature

Patent Literature 1 JP 2004-59752 A
Patent Literature 2 JP 2005-525682 T
Patent Literature 3 JP 2004-79252 A

## SUMMARY OF INVENTION

### Technical Problem

It is an object of the present invention to provide a proton conductive polymer electrolyte membrane having high oxidation resistance, and a process capable of producing this electrolyte membrane industrially.

### Solution to Problem

The production process of the present invention includes the steps of: irradiating resin fine particles with radiation; graft-polymerizing a vinyl monomer having a sulfonic acid group precursor and a vinyl monomer having a carbonyl group equivalent with the irradiated resin fine particles in a solid-liquid two-phase system to obtain a finely particulate graft polymer having graft chains of the vinyl monomers; preparing a casting solution by dissolving a polymer having a phosphoric acid group or a phosphonic acid group and the obtained graft polymer in a casting solvent, and thereby applying the prepared casting solution to a support to form a cast membrane; drying the formed cast membrane to obtain a film; converting the sulfonic acid group precursor contained in the graft polymer or the film into a sulfonic acid group; and forming a crosslinked structure between the carbonyl group equivalents contained in the cast membrane or the film by using a crosslinking agent. The solid-liquid two-phase system is composed of a liquid phase including the vinyl monomers and a solvent for the monomers and a solid phase including the resin fine particles.

The proton conductive polymer electrolyte membrane of the present invention includes: a graft polymer; and a polymer having a phosphoric acid group or a phosphonic acid group. The graft chain of the graft polymer is a copolymer chain of a vinyl monomer having a sulfonic acid group and a vinyl monomer having a carbonyl group, and has a crosslinked structure formed between the carbonyl groups.

### Advantageous Effects of Invention

According to the production process of the present invention, proton conductive polymer electrolyte membranes having high oxidation resistance can be produced industrially by graft polymerization. The proton conductive polymer electrolyte membrane of the present invention has high oxidation resistance and is suitable for use in PEFCs.

## BRIEF DESCRIPTION OF DRAWINGS

Fig 1 is a diagram showing the evaluation results of the oxidation resistance of polymer electrolyte membranes fabricated in Examples and Comparative Examples.

## DESCRIPTION OF EMBODIMENTS

Hereinafter, embodiments for carrying out the present invention are specifically described.

[Production Process of Proton Conductive Polymer Electrolyte Membrane] (Irradiation step)

The production process of the present invention includes a step of irradiating resin fine particles with radiation (irradiation step). The resin fine particles are composed of a resin material serving as a base material of a polymer electrolyte membrane. The resin material constituting the resin fine particles is not limited as long as it is a material that can be subjected to radiation graft polymerization. Preferably, the resin fine particles include at least one polymer selected from aromatic hydrocarbon polymers, olefin polymers, and fluorinated olefin polymers because their use makes it possible to produce a polymer electrolyte membrane having high electrochemical stability and mechanical strength. The resin fine particles can be made of at least one of these polymers.
Examples of aromatic hydrocarbon polymers include polystyrene, polyethylene terephthalate, polybutylene terephthalate, polytrimethylene terephthalate, polyethylene naphthalate, polybutylene naphthalate, polyetheretherketone, polyetherketone, polysulfone, polyethersulfone, polyphenylene sulfide, polyarylate, polyetherimide, aromatic polyimide, and polyamide imide.
Examples of olefin polymers include low- density polyethylene, high- density polyethylene, ultra- high- molecular-weight polyethylene, polypropylene, polybutene, and polymethylpentene.
Examples of fluorinated olefin polymers include polyvinylidene fluoride (PVDF), ethylene-tetrafluoroethylene copolymer (ETFE), vinylidene fluoride-hexafluoropropylene copolymer, tetrafluoroethylene-hexafluoropropylene copolymer, polytetrafluoroethylene, tetrafluoroethylene-perfluoroalkyl vinyl ether copolymer, polychlorotrifluoroethylene, and tetrafluoroethylene-hexafluoropropylene-vinylidene fluoride copolymer.
Among them, from the viewpoints of reactivity during graft polymerization and solubility for preparing a casting solution, it is preferable that the resin fine particles include at least one selected from polyetheretherketone, polyetherimide, polyamideimide, polyethylene, polypropylene, polyvinylidene fluoride (PVDF), ethylene-tetrafluoroethylene copolymer (ETFE), and vinylidene fluoride-hexafluoropropylene copolymer. Further, in consideration of the chemical stability and the production cost of the electrolyte membrane, it is particularly preferable that the resin fine particles include at least one selected from PVDF and ETFE.
The resin material constituting the resin fine particles may be a copolymer, or may be a mixture of two or more polymers.
The average particle diameter of the resin fine particles is preferably 10 $\mu$m to 500 $\mu$m, and more preferably 50 $\mu$m to 300 $\mu$m. The resin fine particles having an excessively large average particle diameter may cause a decrease in the reaction rate of graft polymerization within themselves, which requires a long time for the subsequent graft polymerization step. A prolonged graft polymerization step decreases the production efficiency of electrolyte membranes. The resin fine particles having an excessively small average particle diameter cause a decrease in the ease of handling the resin material in each step. In the present description, a value measured by dry sieving is adopted as the average particle diameter of the resin fine particles.
A known method can be used as a method of irradiating the resin fine particles with radiation. As the type of radiation to be applied to the resin fine particles, ionizing radiation such as $\alpha$ rays, ß rays, $\gamma$ rays, electron rays, and ultraviolet rays is used. For graft polymerization, $\gamma$ rays and electron rays are particularly suitable. The dose of radiation required for the graft polymerization is typically 1 to 500 kGy, and preferably 10 to 300 kGy. When the dose of radiation to the resin fine particles is less than 1 kGy, radical production may decrease, which makes the graft polymerization difficult to achieve. When the dose of radiation is more than 500 kGy, the crosslinking reaction may proceed excessively in the subsequent graft polymerization step, or the resin material constituting the resin fine particles may deteriorate.
There are the following methods for radical polymerization: a peroxide method in which irradiation and radical reaction are carried out in the presence of oxygen; and a polymer radical method in which irradiation and radical reaction are carried out in the absence of oxygen. In the peroxide method, a graft reaction proceeds from an oxygen radical bonded to the resin material. On the other hand, in the polymer radical method, a graft reaction proceeds from a radical generated in the resin material. In the production process of the present invention, it is preferable to allow the radical polymerization to proceed by the polymer radical method in order to prevent the graft reaction from being inhibited by the presence of oxygen. Therefore, it is preferable to irradiate the resin fine particles with radiation in an inert gas atmosphere or in a vacuum. The temperature of irradiation (irradiation temperature) is preferably in a range of -100 to 100°C, and particularly preferably in a range of -100 to 60°C. When the irradiation temperature is too high, the generated radicals are easily deactivated. In order to prevent the deactivation of the radicals, it is desirable to keep the irradiated resin fine particles at a temperature not higher than the glass transition temperature of the resin material constituting these fine particles.

(Graft polymerization step)

In the production process of the present invention, after the irradiation step, the irradiated resin fine particles are subjected to graft polymerization to obtain a finely particulate graft polymer (graft polymerization step). Specifically,

a vinyl compound (vinyl monomer A) having a sulfonic acid group precursor and a vinyl compound (vinyl monomer B) having a carbonyl group equivalent are used as monomers, and these vinyl monomers A and B are graft-polymerized with the resin fine particles that have been irradiated. Thereby, a finely particulate graft polymer including the resin fine particles and copolymer chains (graft chains) of the vinyl monomers A and B bonded to the fine particles is obtained. This graft polymerization is carried out in a solid-liquid two-phase system. The solid-liquid two phase system is composed of a liquid phase including the vinyl monomers and a solvent for these monomers and a solid phase including the resin fine particles. In the liquid phase, the vinyl monomers are dissolved in this solvent (polymerization solvent). That is, the liquid phase includes the vinyl monomers and the polymerization solvent (first solvent), and the irradiated resin fine particles maintain their solid phase in this liquid phase. One example of the graft polymerization in the solid-liquid two-phase system is carried out with the irradiated resin fine particles being dispersed in a monomer solution obtained by dissolving the vinyl monomers in the polymerization solvent. It is preferable to perform the graft polymerization step in an atmosphere with an oxygen concentration as low as possible in order to reduce the inhibition of the reaction by the presence of oxygen, as in the irradiation step.

The vinyl monomer A is used to introduce a sulfonic acid group as a proton conductive group into the resin material constituting the polymer electrolyte membrane. The vinyl monomer A is not limited as long as it is a vinyl compound having a sulfonic acid group precursor, but is preferably a vinyl compound represented by the general formula $H_2C=C\ (X^1)\ R^1$, where $X^1$ is a hydrogen atom, a fluorine atom, or a monovalent hydrocarbon group, and $R^1$ is a sulfonic acid group precursor or a monovalent substituent having a sulfonic acid group precursor.

Preferably, the sulfonic acid group precursor is a group that can be easily converted into a sulfonic acid group by hydrolysis and/or ion exchange in the conversion step to be performed after the graft polymerization step. The sulfonic acid group precursor is preferably an alkali metal salt or an ester of a sulfonic acid group. Specific examples of the sulfonic acid group precursor include: sulfonic acid aliphatic esters typified by sulfonic acid alkyl esters such as sulfonic acid methyl ester, sulfonic acid ethyl ester, sulfonic acid propyl ester, sulfonic acid butyl ester, and sulfonic acid cyclohexyl ester; sulfonic acid aromatic esters such as sulfonic acid phenyl ester; sulfonic acid metal salts typified by sulfonic acid alkali metal salts such as sulfonic acid sodium salt and sulfonic acid lithium salt.

The vinyl monomer A (sulfonic acid-containing vinyl monomer) is, for example, a vinyl sulfonic acid derivative, an aryl sulfonic acid derivative, or a sulfonic acid derivative of a styrene-based compound. Styrene-based compounds include various types of monofunctional styrene derivatives, and also include monofunctional styrene derivatives containing ions such as styrene sulfonyl fluorides.

The preferred vinyl monomer A is at least one selected from methyl esters, ethyl esters, propyl esters, butyl esters, cyclohexyl esters and phenyl esters of styrene sulfonic acid.

The vinyl monomer B is used to introduce a crosslinked structure into the graft chain having a proton conductive group in the polymer electrolyte membrane. The vinyl monomer B is not limited as long as it is a vinyl compound having a carbonyl group equivalent, but is preferably a vinyl compound represented by the general formula $H_2C=C\ (X^2)\ R^2$, where $X^2$ is a hydrogen atom, a fluorine atom, or a monovalent hydrocarbon group, and $R^2$ is a carbonyl group equivalent or a monovalent substituent having a carbonyl group equivalent. In the present description, the carbonyl group equivalent means a carboxylic acid group or a group that can be converted into a carboxylic acid group relatively easily. Preferably, the carbonyl group equivalent is at least one selected from a carboxylic acid group, a carboxylic acid group derivative, a nitrile group, and an amide group. The carboxylic acid group derivative is, for example, a carboxylic acid group ester or a carboxylic acid group metal salt.

The vinyl monomer B (carboxylic acid-containing vinyl monomer) is, for example, acrylic acid, methyl acrylate, methacrylic acid, methyl methacrylate, vinylbenzoic acid, methyl vinylbenzoate, or acrylonitrile. Among them, at least one selected from acrylic acid, methyl acrylate, methacrylic acid, and methyl methacrylate is preferred.

In the graft polymerization step, one type of vinyl monomer A may be used alone, or two or more types of vinyl monomers A may be used. Likewise, one type of vinyl monomer B may be used alone, or two or more types of vinyl monomers B may be used. The formed graft chain is a copolymer chain of the vinyl monomers used. Monomers other than the vinyl monomers A and B may be introduced into the graft chain as long as the effects of the present invention can be obtained.

As a polymerization solvent for dissolving the vinyl monomers, a solvent that hardly dissolves the resin material constituting the resin fine particles is selected. This is because the resin fine particles are required to maintain their solid phase for the graft polymerization in the solid-liquid two-phase system. The polymerization solvent is not limited as long as this condition is satisfied. Specific examples of the polymerization solvent include aromatic compounds typified by aromatic hydrocarbons such as benzene, toluene, ethylbenzene and xylene, and phenols such as phenol and cresol. The polymerization solvent may be an ether typified by a cyclic ether such as 1,4-dioxane. Among them, aromatic compounds, in particular, aromatic hydrocarbons are preferred. Aromatic compounds dissolve the vinyl monomers A and B efficiently. In addition, the shape of the resin fine particles is particularly well maintained in a polymerization solvent of an aromatic compound.

The solubilities of the vinyl monomers A and B and the resin fine particles in the polymerization solvent vary

depending on the structures and polarities of the resin material constituting the resin fine particles and those of the vinyl monomers A and B. Therefore, the polymerization solvent can be selected as appropriate depending on the vinyl monomers and the resin fine particles used. The polymerization solvent may be a mixture of two or more types of solvents. However, amide compounds such as dimethylacetamide, N-methylpyrrolidone, and dimethylformamide; sulfoxides such as dimethyl sulfoxide (DMSO); amide phosphates such as hexamethylphosphoric triamide; and sulfonamides are not suitable as polymerization solvents because they tend to dissolve both the vinyl monomers and the resin fine particles. Esters and ketones are less suitable as polymerization solvents because they may inhibit the graft polymerization by slightly dissolving the resin fine particles.

It is preferable to prepare the monomer solution of the vinyl monomer A and the monomer solution of the vinyl monomer B separately, which constitute the liquid phase in the graft polymerization.

The concentration of the vinyl monomer in each of the monomer solutions is preferably 0.2 to 3 mol/L, and more preferably 0.5 to 2.5 mol/L. When the concentration is less than 0.2 mol/L, the graft reaction may not proceed sufficiently. When the concentration is more than 3 mol/L, the production of homopolymers as by-products tends to increase as the polymerization of only the monomers proceeds in parallel with the graft reaction. This causes irregular progress of a graft reaction. In addition, an excessively high monomer concentration may cause difficulty in washing to be performed after the graft polymerization, resulting in an increase in the production cost of the polymer electrolyte membrane, depending on the type of monomers.

The graft chain is a copolymer chain of the vinyl monomers A and B, and the copolymerization ratio (molar ratio) of the vinyl monomer B to the vinyl monomer A is preferably 0.1 to 30, and more preferably 0.5 to 20, with respect to 100 of the vinyl monomer A.

Additives such as a reaction inhibitor may be added to each of the monomer solutions, if necessary.

The graft polymerization can be carried out by applying a known method thereto.

In the production process of the present invention, the graft polymerization of the vinyl monomer A and that of the vinyl monomer B may be started simultaneously, but it is preferable that they are started sequentially. For this purpose, for example, the following procedural steps can be performed. First, either one of the monomer solutions is poured into a vessel of glass, stainless steel, or the like, and vacuum degassing and inert gas (for example, nitrogen) bubbling are performed to remove dissolved oxygen, which inhibits the graft reaction, from the monomer solution. Next, the irradiated resin fine particles are put into this monomer solution with stirring to initiate the graft polymerization of one of the vinyl monomers contained in this solution. Then, the other monomer solution is dropped into the reaction solution. Preferably, the dropping of the other monomer solution is carried out in several portions. In this case, a graft chain having a structure in which these two vinyl monomers are dispersedly polymerized is obtained.

Which of the vinyl monomers A and B should be graft-polymerized first, and the conditions for dropping the monomer solution, such as the dropping timing and rate, may be determined as appropriate by taking into consideration the difference in reactivity in graft polymerization between both monomers, the difference in permeability to the resin material between both monomers, and the preferred copolymerization ratio of both monomers in the graft chain. By adjusting these, the distribution of the plurality of vinyl monomers with different reactivities in the graft chain can be controlled appropriately.

The reaction time of the graft polymerization is, for example, about 10 minutes to 12 hours. The reaction temperature is, for example, 0 to 100°C, and preferably 40 to 80°C. After the graft reaction is completed, the finely particulate graft polymer is extracted from the polymerization solution, for example, by filtration. The extracted polymer is, for example, washed 3 to 6 times with an appropriate amount of solvent to remove the polymerization solvent, unreacted monomers, and homopolymers, and then dried. The solvent is, for example, toluene, methanol, isopropyl alcohol, and acetone.

(Casting step)

In the production process of the present invention, after the graft polymerization step, a cast membrane including a polymer having a phosphoric acid group or a phosphonic acid group and the graft polymer formed in the graft polymerization step is formed (casting step). A film-forming method generally called "casting" is used to form the cast membrane. For example, the finely particulate graft polymer formed in the graft polymerization step and the polymer having a phosphoric acid group or a phosphonic acid group are dissolved in a casting solvent (second solvent) to prepare a casting solution. Next, the prepared casting solution is applied to an appropriate support to form a cast membrane. The formed cast membrane is dried in the subsequent drying step (specifically, the casting solvent in the cast membrane is evaporated) to obtain a film.

Preferably, the polymer having a phosphoric acid group or a phosphonic acid group is a polymer of a vinyl compound ("phosphorous vinyl monomer") having a phosphoric acid group or a phosphonic acid group. Preferably, the phosphorous vinyl monomer has a molecular structure represented by the following Formula (1) . In Formula (1), $X^3$ is a hydrogen atom or a methyl group, $R^3$ is a single bond, an ether bond, a ketone group, or a divalent substituent which

may have an ether bond or a ketone group. $Z^3$ is a hydroxyl group, an alkoxy group, or an alkyl group. Metals are present in a fuel cell. The metals are, for example, platinum used as a catalyst and iron used for pipes and a container. When the fuel cell is operated, metal ions derived from these metals are generated as impurities. When the generated metal ions are trapped in the sulfonic acid groups in the electrolyte membrane, the proton conductivity of the membrane decreases. In addition, platinum ions that have migrated into the electrolyte membrane decompose hydrogen peroxide, which is considered to be generated in the fuel cell. Hydroxyl radicals (OH radicals) generated by the decomposition of hydrogen peroxide are likely to cause deterioration of the electrolyte membrane. From these viewpoints, $Z^3$ in the phosphorous vinyl monomer represented by Formula (1) is preferably a hydroxyl group. Since hydroxyl groups are highly hydrophilic, they easily trap OH radicals, are highly stable to acid and alkali, and further can trap metal ions as impurities.

[Chemical Formula 1]

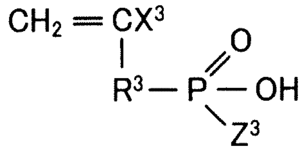
(1)

A specific phosphorous vinyl monomer is, for example, a monomer having a molecular structure represented by the following Formula (2). This monomer is commercially available under the registered trademark "Phosmer" from Uni Chemical Co., Ltd. In Formula (2), n is an integer of 1 to 6, and R is a hydrogen atom, a chloromethyl group, or a methyl group. The polymer of the phosphorous vinyl monomer is, for example, polyvinyl phosphonic acid.

[Chemical Formula 2]

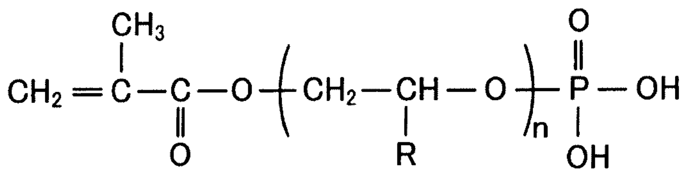
(2)

The polymer of the phosphorous vinyl monomer can be obtained by allowing the polymerization reaction of this monomer to proceed by heating or the like. From the viewpoints that the phosphorous vinyl monomer can be used efficiently and that there is no need to remove unreacted monomers in the subsequent steps, it is preferable to allow the polymerization reaction of the phosphorous vinyl monomer to proceed in the casting solvent before the casting solution is prepared. For example, the casting solution can be prepared by dissolving the phosphorous vinyl monomer in the casting solvent to allow the polymerization reaction to proceed and then putting the graft polymer into this reaction solution. Then, through the casting step and the drying step, a film including the polymer of the phosphorous vinyl monomer is obtained. When the phosphorous vinyl monomer represented by Formula (1) is used, a film including a polymer having a structural unit represented by Formula (3) is obtained.

[Chemical Formula 3]

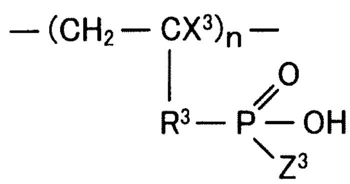
(3)

It is desirable to use a compound capable of dissolving the graft chains formed by the graft polymerization, the resin fine particles, and the polymer having a phosphoric acid group or a phosphonic acid group, as the casting solvent for dissolving the polymer having a phosphoric acid group or a phosphonic acid group and the graft polymer. The casting solvent is, for example a non-proton polar solvent such as dimethylacetamide, N-methylpyrrolidone, dimethylformamide, or dimethyl sulfoxide (DMSO).

The concentration of the graft polymer in the casting solution is preferably 5 to 30 wt%, and more preferably 10 to 25 wt%. When this concentration exceeds 30 wt%, the viscosity of the casting solution becomes excessively high, which may make it difficult to form a cast membrane and a film each having a uniform thickness. When this concentration is less than 5 wt%, the applied cast membrane easily flows, which may make it difficult to form a cast membrane and a film each having a uniform thickness.

The ratio of the polymer having a phosphoric acid group or a phosphonic acid group and the graft polymer, both of which are dissolved in the casting solvent, may be determined according to the weight ratio of these polymers in a desired polymer electrolyte membrane. For example, the ratio of the polymer having a phosphoric acid group or a phosphonic acid group is 1 to 20 parts by weight, and more preferably 2 to 10 parts by weight, with respect to 100 parts by weight of the graft polymer. A polymer electrolyte membrane having higher oxidation resistance can be obtained in this ratio range.

The support to which the casting solution is to be applied is, for example, a sheet made of glass, metal, or resin. The thickness of the cast membrane may be adjusted as appropriate so that the finally obtained polymer electrolyte membrane have a thickness of a desired value. The thickness of the polymer electrolyte membrane is preferably 10 μm to 70 μm.

A known method can be used to apply the casting solution to the support.

(Drying step)

In the drying step to be performed after the casting step, the cast membrane formed in the casting step is dried to form a film.

The drying temperature for forming a film with a thickness of 10 μm to 70 μm is preferably not lower than a temperature that requires 6 hours to dry the membrane (drying time), and more preferably not lower than a temperature that requires a 2-hour drying time. The drying temperature is preferably not higher than a temperature that is lower by 20°C than the melting point of the resin material constituting the resin fine particles, and more preferably not higher than a temperature that is lower by 40°C than the melting point of this resin material. When the drying temperature is excessively high, the proton conductivity of the finally obtained polymer electrolyte membrane may decrease. When the drying temperature is excessively low, it takes a long time to perform the drying step, which decreases the efficiency of producing the electrolyte membrane.

In the drying step, it is preferable to dry the cast membrane formed in the casting step, at a drying temperature not lower than a temperature that requires 6 hours to dry the membrane and not higher than a temperature that is lower by 20°C than the melting point of the resin fine particles, to obtain a film with a thickness of 10 μm to 70 μm.

A known membrane drying method can be used in the drying step.

(Conversion step)

The production process of the present invention further includes a step of converting the sulfonic acid group precursor contained in the graft polymer into a sulfonic acid group (conversion step).

The conversion into a sulfonic acid group is carried out, for example, using hydrolysis and/or ion exchange. In the case where the sulfonic acid group precursor is an alkyl ester of a sulfonic acid group, the conversion step can be performed by an acid treatment using nitric acid, hydrochloric acid, sulfuric acid, etc., a treatment using an aqueous alcohol solution, or a base treatment in an amine derivative solution. In the case where the sulfonic acid group precursor is a metal salt of a sulfonic acid group, the conversion step can be performed by an acid treatment using nitric acid, hydrochloric acid, sulfuric acid, etc. Preferably, the acid concentration for the acid treatment is about 1 N. These treatments can be carried out under the heating condition, if necessary.

From the viewpoint of workability, the conversion step is preferably performed on the film that has undergone the drying step, but may be performed at an arbitrary timing as long as the sulfonic acid group precursor contained in the graft polymer is converted into a sulfonic acid group. That is, in the conversion step, the sulfonic acid group precursor contained in the graft polymer or the film is converted into a sulfonic acid group.

(Crosslinking step)

The production process of the present invention further includes a step of forming a crosslinked structure between the carbonyl group equivalents contained in the graft chains by using a crosslinking agent (crosslinking step). A three-dimensional network is formed between the graft chains by introducing the crosslinked structure. Therefore, even if the graft chains are partially broken, the release and outflow of the broken chains are suppressed. That is, combined with the mixture with the polymer having a phosphoric acid group or a phosphonic acid group, the resulting polymer electrolyte membrane has high oxidation resistance.

The crosslinking agent used for the crosslinking treatment is preferably a diamine compound. An example of a crosslinked structure (crosslinked structure between the carbonyl group equivalents) formed by using a diamine compound as a crosslinking agent is represented by the following Formula (4) . Formula (4) is an example where the vinyl monomer A is a styrene sulfonic acid, the vinyl monomer B is a compound represented by the above general formula $CH^2$=C ($X^2$) $R^2$, and a diamine compound represented by the general formula H ($X^4$) N- $R^4$- N ($X^4$) H is used as a

crosslinking agent. In Formula (4), $X^2$ is a group derived from $X^2$ of the vinyl monomer B represented by the above formula $CH^2$=C ($X^2$) $R^2$. $X^4$ is, for example, a hydrogen atom, a methyl group, or an ethyl group. $R^4$ is, for example, an alkylene group represented by the formula- $C_nH_{2n}$- (where n is an integer), or a group represented by the formula- Ph- $C_nH_{2n}$- Ph- (where n is an integer) . By introducing a crosslinked structure by using a diamine compound as a crosslinking agent, two amino groups of the diamine compound each react with the carbonyl group equivalent of the graft chain. As a result, a crosslinked structure including two amide bonds (- $CONX^4$- ) as shown in Formula (4) is formed between the graft chains. These amide bonds each include a carbonyl group derived from the vinyl monomer having the carbonyl group equivalent. In other words, this carbonyl group forms part of the amide bond. As described above, the graft chain of the graft polymer included in the polymer electrolyte membrane obtained by the production process of the present invention is a copolymer chain of a vinyl monomer having a sulfonic acid group and a vinyl monomer having a carbonyl group, and has a crosslinked structure formed between the carbonyl groups.

[Chemical Formula 4]

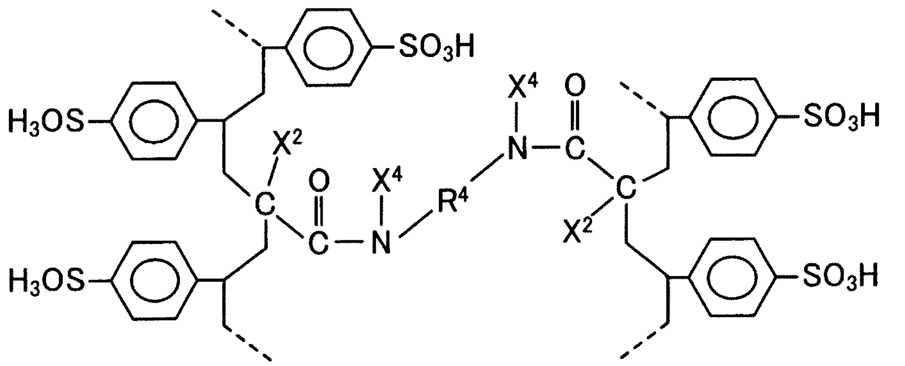

(4)

Examples of preferred diamine compounds as crosslinking agents include 1, 2- ethylenediamine, 1, 3- propylenediamine, 1, 4- tetramethylenediamine, 1, 6- hexamethylenediamine, N, N'- dimethyl- 1, 3- propanediamine, p- phenylenediamine, m- phenylenediamine, N, N'- diphenyl- p- phenylenediamine, and diaminodiphenylmethane. Among them, 1, 2- ethylenediamine, 1, 3- propylenediamine, 1, 4- tetramethylenediamine, and diaminodiphenylmethane are particularly preferred.

The conditions for the crosslinking treatment, for example, the concentration of the crosslinking agent, the solvent, and the reaction temperature are not particularly limited as long as a crosslinked structure can be introduced between the graft chains without deteriorating the film. It is preferable to perform the crosslinking treatment using an alcoholic solvent such as ethanol or methanol under mild conditions below the boiling point of this solvent. The amide groups formed by the crosslinking reaction may be converted into imide structures by further performing a treatment with an acylating agent in order to suppress the reactivity of secondary amide groups. The crosslinked structure formed by the crosslinking treatment can be observed by infrared (IR) spectroscopy and/or nuclear magnetic resonance (NMR) method.

When a diamine compound is used as a crosslinking agent, the crosslinking treatment is carried out under basic conditions in a broad sense, and the sulfonic acid group precursor can be converted into a sulfonic acid group simultaneously in some cases. In such a case, the conversion step and the crosslinking step may be performed simultaneously.

From the viewpoint of the dimensional accuracy of the obtained polymer electrolyte membrane, the crosslinking step is preferably performed on the film that has undergone the drying step, but may be performed simultaneously with the drying step of the cast membrane.

The production process of the present invention can include steps other than the above-mentioned steps as long as the effects of the present invention can be obtained.

[Proton Conductive Polymer Electrolyte Membrane]

The proton conductive polymer electrolyte membrane of the present invention can be produced, for example, by the production process of the present invention. The polymer electrolyte membrane of the present invention includes a graft polymer and a polymer having a phosphoric acid group or a phosphonic acid group. The graft polymer is composed of a resin material having graft chains formed therein. The resin material is, for example, a material constituting the above-mentioned resin fine particles. The graft chain is a copolymer chain of a vinyl monomer having a sulfonic acid group and a vinyl monomer having a carbonyl group, and has a crosslinked structure formed between the carbonyl groups.

In the polymer electrolyte membrane of the present invention, the carbonyl group may form part of the amide

bond.

The polymer electrolyte membrane of the present invention can be used in the same applications as conventional proton conductive polymer electrolyte membranes. The polymer electrolyte membrane of the present invention has high oxidation resistance and therefore has high durability, and is suitable for use in PEFCs including DMFCs.

## EXAMPLES

Hereinafter, the present invention will be described in more detail by way of examples. The present invention is not limited to the following examples.

First, the method for evaluating the properties (such as the thickness, proton conductivity, gel fraction, and oxidation resistance) of polymer electrolyte membranes fabricated as Examples and Comparative Examples is described.

### [Thickness]

The thickness of each electrolyte membrane was measured with a dial thickness gauge G-6C (1/1000 mm, a probe diameter of 5 mm) manufactured by Ozaki Mfg. Co., Ltd. in an atmosphere with a temperature of 25 ± 2°C and a humidity of 65 ± 20% RH.

### [Proton Conductivity σ]

The proton conductivity of each electrolyte membrane was measured using a cell specifically for measurement of membrane resistance, a potentiostat (HABF- 5001, manufactured by Hokuto Denko Corp.), and a voltmeter (HE- 104, manufactured by Hokuto Denko Corp.) . First, the cell equipped with two platinum electrodes was filled with an aqueous sulfuric acid solution with a concentration of 1 mol/L and placed at room temperature. Next, the potential differences between these two platinum electrodes measured at various currents applied thereto were measured, and thereby a resistance R1 in the presence of a sample membrane with an area of Sm between these electrodes and a resistance R0 in the absence of the sample membrane therebetween were obtained. The resistance Rm of the sample membrane was obtained from the difference between R1 and R0, and the proton conductivity σ of the sample membrane was calculated by the following Formula (5) :

$$\sigma = 1/(Rm \times Sm) = 1/\{(R1 - R0) \times Sm\} \qquad (5)$$

where σ is the proton conductivity [S/cm$^2$], Rm is the resistance [Ω] of the sample membrane, and Sm is the area [cm$^2$] of the sample membrane.

### [Gel Fraction]

In order to ascertain the effect of crosslinking, the gel fraction of each electrolyte membrane was measured. The measurement of the gel fraction was performed in the following manner.

First, a test piece was cut from the fabricated electrolyte membrane, and the weight W1 (g) of the test piece was measured. Next, N- methyl- 2- pyrrolidone was added to this test piece so that the weight of this electrolyte membrane was 1 wt% of the total. This mixture was shaken at 70°C for 12 hours (dissolving treatment), and then the weight W2 (g) of solid residues in the solution was measured. The gel fraction of the electrolyte membrane was calculated from the obtained W1 and W2 values by the following Formula (6) :

$$\text{Gel fraction (\%)} = W2/W1 \times 100\ (\%) \qquad (6)$$

where W1 is the weight (g) of the test piece before the dissolving treatment, and W2 is the weight (g) of the solid components after the dissolving treatment.

### [Oxidation Resistance Test (Fenton Test)]

A test membrane of 3 cm × 4 cm in size was cut from the fabricated electrolyte membrane, and the weight W3 (g) of the obtained test membrane was measured. Next, the cut test membrane was put into 16.3 g of aqueous solution

(in a covered test tube) containing iron (I) sulfate $Fe_2SO_4$ with a concentration of 30 ppm and hydrogen peroxide with a concentration of 3 wt%, and completely immersed in the aqueous solution. This was kept in a hot bath maintained at 60°C. The test membrane was taken out of the above aqueous solution every predetermined time, and its weight W4 (g) was measured. The measurement of the weight W4 was performed after the test membrane taken out of the aqueous solution was washed well with RO (reverse osmosis) water and dried. The weight retention rate of the test membrane after this immersion treatment was calculated by the following Formula (7), and the oxidation resistance of the electrolyte membrane was evaluated based on the calculated weight retention rate. An electrolyte membrane having a high weight retention rate over a longer time period has higher oxidation resistance.

$$\text{Weight retention rate (\%)} = \{1 - (W3 - W4)/Wp\} \times 100\ (\%) \qquad (7)$$

where W3 is the weight (g) of the test membrane before the immersion treatment, W4 is the weight (g) of the test membrane after the immersion treatment, and Wp is the weight (g) of the graft chains in the test membrane before the immersion treatment.

It should be noted that "W3 - W4" corresponds to the weight of the graft chains that have been lost in the immersion treatment.

(Example 1)

50 g of finely particulate polyvinylidene fluoride (PVDF) (KF POLYMER W#1100, average particle diameter of about 120 μm, manufactured by Kureha) was put in an oxygen barrier bag having a barrier film. A deoxidizer (AGELESS, manufactured by Mitsubishi Gas Chemical) was put into this bag, and the bag was heat-sealed. This bag was allowed to stand a whole day to adsorb oxygen in the bag well onto the deoxidizer. In this manner, deoxidation was performed before the irradiation with radiation.

After the deoxidation, this bag containing PVDF fine particles was irradiated with γ-rays from cobalt-60 as a radiation source at a dose of 30 kGy. Next, the irradiated bag was allowed to stand at low temperatures maintained by dry ice.

Next, 11 g of styrene sulfonic acid ethyl ester (EtSS) as a vinyl monomer A and 14 g of toluene as a polymerization solvent were put into a separable flask. With this mixture being stirred at a temperature of 70°C, nitrogen was bubbled therethrough for 30 minutes to perform sufficient deoxidation. In this manner, a solution of a sulfonic acid- containing vinyl monomer was prepared.

Apart from this, 4 g of methacrylic acid as a vinyl monomer B was dissolved in 2 g of toluene, and nitrogen was bubbled therethrough for 30 minutes at room temperature to perform sufficient deoxidation. In this manner, a solution of a carboxylic acid-containing vinyl monomer was prepared.

Next, 5 g of the γ- ray irradiated PVDF fine particles were taken out of the bag and put into the solution of the sulfonic acid- containing vinyl monomer. Subsequently, nitrogen bubbling and stirring were continued to allow graft polymerization to proceed. The reaction temperature was 70°C, and the reaction time was 2 hours. During this reaction time, 10 minutes, 20 minutes, and 40 minutes after the addition of the PVDF resin, 1 g of the solution of the carboxylic acid- containing vinyl monomer at each of these timings, 3 g in total, was dropped into the reaction solution. The dropping of the monomer solution was carried out in such a manner as to keep oxygen from entering the reaction system.

After the polymerization was completed, the solution in the flask was filtered to extract fine particles of a graft polymer. Next, the extracted fine particles were immersed in acetone (at room temperature for 60 minutes), and then the filtration to extract fine particles was repeated another five times. Fine particles extracted by the last filtration were dried overnight in a dryer maintained at 60°C. Thus, a finely particulate graft polymer was obtained.

Next, a casting solution was prepared, and a cast membrane was formed. First, an aqueous solution containing "Phosmer M- 101" (manufactured by Uni Chemical Co., Ltd.) as a phosphorous vinyl monomer was weighed so that the weight of solid components was 0.1 g. Next, 4 g of N- methyl- 2- pyrrolidone as a casting solvent was added to the weighed aqueous solution. This mixture was shaken at 70°C for 1 hour to obtain a solution containing the polymer of the phosphorous vinyl monomer. Next, 1 g of the above- mentioned graft polymer was put into the obtained solution, and the resulting mixture was shaken at 70°C for 1 hour to obtain a casting solution. This casting solution was applied to a glass plate with a gap thickness of 240 μm to form a cast membrane.

Next, the formed cast membrane was dried by heating at 80°C for 2 hours. After this drying, a film with a thickness of 45 μm was obtained.

Next, the obtained film was immersed in an aqueous ethanol solution (with a concentration of 50 wt%) maintained at 70°C for 12 hours, and thereby sulfonic acid ethyl ester contained in this film was hydrolyzed to convert it into a sulfonic acid group. Then, the film was taken out of the aqueous ethanol solution and washed with pure water two or more times

and dried.

Next, a film weighing 55 mg was cut from the dried film, and the cut piece of the film was immersed in a crosslinking solution maintained at 70°C for 5 hours to allow the crosslinking reaction to proceed. As a crosslinking solution, a solution obtained by dissolving 10 mg of 1, 2- ethylenediamine as a crosslinking agent in 10 g of ethanol was used. In this manner, a polymer electrolyte membrane of Example 1 was obtained.

(Example 2)

A polymer electrolyte membrane was obtained in the same manner as in Example 1, except that an aqueous solution containing polyvinyl phosphonic acid (manufactured by Aldrich) as a polymer having a phosphoric acid group or a phosphonic acid group was used, that the aqueous solution was weighed so that the solid content was 0.1 g to prepare a casting solution, and that 30 mg of diaminodiphenylmethane was used as a crosslinking agent.

(Comparative Example 1)

A polymer electrolyte membrane was obtained in the same manner as in Example 1, except that a polymer having a phosphoric acid group or a phosphonic acid group was not added to prepare a casting solution.

(Comparative Example 2)

A polymer electrolyte membrane was obtained in the same manner as in Example 1, except that the crosslinking step was not performed.

(Comparative Example 3)

A polymer electrolyte membrane was obtained in the same manner as in Example 1, except that the dropping of a solution of a carboxylic acid-containing vinyl monomer was not carried out during graft polymerization, that a polymer having a phosphoric acid group or a phosphonic acid group was not added to prepare a casting solution, and that the crosslinking step was not performed.

(Comparative Example 4)

The formation of a cast membrane was tried in the same manner as in Example 1, except that a solution further containing 0.33 g of divinylbenzene was used as a solution of a sulfonic acid-containing vinyl monomer, that the dropping of a solution of a carboxylic acid-containing vinyl monomer was not carried out during graft polymerization, and that a polymer having a phosphoric acid group or a phosphonic acid group was not added to prepare a casting solution. However, since the casting solution was gelled due to the introduction of a crosslinked structure during graft polymerization, a uniform cast membrane could not be formed.

Except for Comparative Example 4 in which an electrolyte membrane could not be fabricated, the thickness, proton conductivity (σ), gel fraction, and oxidation resistance of the electrolyte membrane fabricated in each of Examples and Comparative Examples were evaluated. Table 1 below and Fig. 1 show the evaluation results.

[Table 1]

| | Crosslinking agent | Phosphorous compound | Thickness (μm) | Proton conductivity ($S/cm^2$) | Gel fraction (%) |
|---|---|---|---|---|---|
| Example 1 | 1,2-ethylenediamine | Phosmer M-101 | 46 | 10 | 49 |
| Example 2 | Diaminodiphenyl-methane | Polyvinyl phosphonic acid | 46 | 11 | 50 |
| Comparative Example 1 | 1,2-ethylenediamine | - | 45 | 12 | 47 |

(continued)

| | Crosslinking agent | Phosphorous compound | Thickness (μm) | Proton conductivity ($S/cm^2$) | Gel fraction (%) |
|---|---|---|---|---|---|
| Comparative Example 2 | - | Phosmer M-101 | 44 | 18 | 0 |
| Comparative Example 3 | - | - | 45 | 19 | 0 |

The electrolyte membranes of Examples 1 and 2, which are proton conductive polymer electrolyte membranes fabricated by the production process of the present invention, had sufficiently high proton conductivities, as shown in Table 1. In addition, the electrolyte membranes of Examples 1 and 2, each of which includes a graft polymer and a polymer having a phosphoric acid group or a phosphonic acid group and has a crosslinked structure of amide bonds introduced between graft chains, showed little change in the weight retention rate even after long exposure to oxidizing conditions, as shown in Fig. 1, and exhibited excellent oxidation resistance.

On the other hand, in the electrolyte membrane of Comparative Example 3, which does not include a polymer having a phosphoric acid group or a phosphonic acid group and does not have a crosslinked structure introduced between graft chains, the graft chains were decomposed rapidly in a short time by the Fenton test, as shown in Fig. 1. Also in the electrolyte membrane of Comparative Example 2, which includes a polymer having a phosphoric acid group or a phosphonic acid group but does not have a crosslinked structure introduced between graft chains, the graft chains were decomposed after the 10-hour Fenton test, although the oxidation resistance was slightly improved compared to the electrolyte membrane of Comparative Example 3. Also in the electrolyte membrane of Comparative Example 1, which has a corsslinked structure introduced between graft chains but does not include a polymer having a phosphoric acid group or a phosphonic acid group, the graft chains were decomposed after the 10-hour Fenton test, although the oxidation resistance was improved compared to the electrolyte membranes of Comparative Examples 2 and 3.

The present invention is applicable to other embodiments as long as they do not depart from the spirit or essential characteristics thereof. The embodiments disclosed in this description are to be considered in all respects as illustrative and not limiting. The scope of the invention is indicated by the appended claims rather than by the foregoing description, and all changes which come within the meaning and range of equivalency of the claims are intended to be embraced therein.

INDUSTRIAL APPLICABILITY

The proton conductive polymer electrolyte membrane obtained by the production process of the present invention and the proton conductive polymer electrolyte membrane of the present invention can suitably be used as electrolyte membranes for PEFCs (including DMFCs).

## Claims

**1.** A process for producing a proton conductive polymer electrolyte membrane, the process comprising the steps of:

irradiating resin fine particles with radiation;
graft-polymerizing a vinyl monomer having a sulfonic acid group precursor and a vinyl monomer having a carbonyl group equivalent with the irradiated resin fine particles in a solid-liquid two-phase system to obtain a finely particulate graft polymer having graft chains of the vinyl monomers;
preparing a casting solution by dissolving a polymer having a phosphoric acid group or a phosphonic acid group and the obtained graft polymer in a casting solvent, and thereby applying the prepared casting solution to a support to form a cast membrane;
drying the formed cast membrane to obtain a film;
converting the sulfonic acid group precursor contained in the graft polymer or the film into a sulfonic acid group; and
forming a crosslinked structure between the carbonyl group equivalents contained in the cast membrane or the film by using a crosslinking agent,
wherein the solid-liquid two-phase system is composed of a liquid phase including the vinyl monomers and a solvent for the monomers and a solid phase including the resin fine particles.

2. The process for producing a proton conductive polymer electrolyte membrane according to claim 1, wherein the casting solvent is a non-proton polar solvent.

3. The process for producing a proton conductive polymer electrolyte membrane according to claim 1, wherein in the drying step, the cast membrane is dried at a drying temperature not lower than a temperature that requires 6 hours to dry the membrane and not higher than a temperature that is lower by 20°C than a melting point of the resin fine particles to obtain the film with a thickness of 10 μm to 70 μm.

4. The process for producing a proton conductive polymer electrolyte membrane according to claim 1, wherein the resin fine particles include at least one selected from polyetheretherketone, polyetherimide, polyamideimide, polyethylene, polypropylene, polyvinylidene fluoride, ethylene-tetrafluoroethylene copolymer, and vinylidene fluoride-hexafluoropropylene copolymer.

5. The process for producing a proton conductive polymer electrolyte membrane according to claim 1, wherein the vinyl monomer having the sulfonic acid group precursor is at least one selected from methyl esters, ethyl esters, propyl esters, butyl esters, cyclohexyl esters and phenyl esters of styrene sulfonic acid.

6. The process for producing a proton conductive polymer electrolyte membrane according to claim 1, wherein the vinyl monomer having the carbonyl group equivalent is at least one selected from acrylic acid, methyl acrylate, methacrylic acid, and methyl methacrylate.

7. The process for producing a proton conductive polymer electrolyte membrane according to claim 1, wherein the crosslinking agent is a diamine compound.

8. A proton conductive polymer electrolyte membrane comprising:

a graft polymer; and
a polymer having a phosphoric acid group or a phosphonic acid group,
wherein a graft chain of the graft polymer is a copolymer chain of a vinyl monomer having a sulfonic acid group and a vinyl monomer having a carbonyl group, and has a crosslinked structure formed between the carbonyl groups.

9. The proton conductive polymer electrolyte membrane according to claim 8, wherein the carbonyl group forms part of an amide bond.

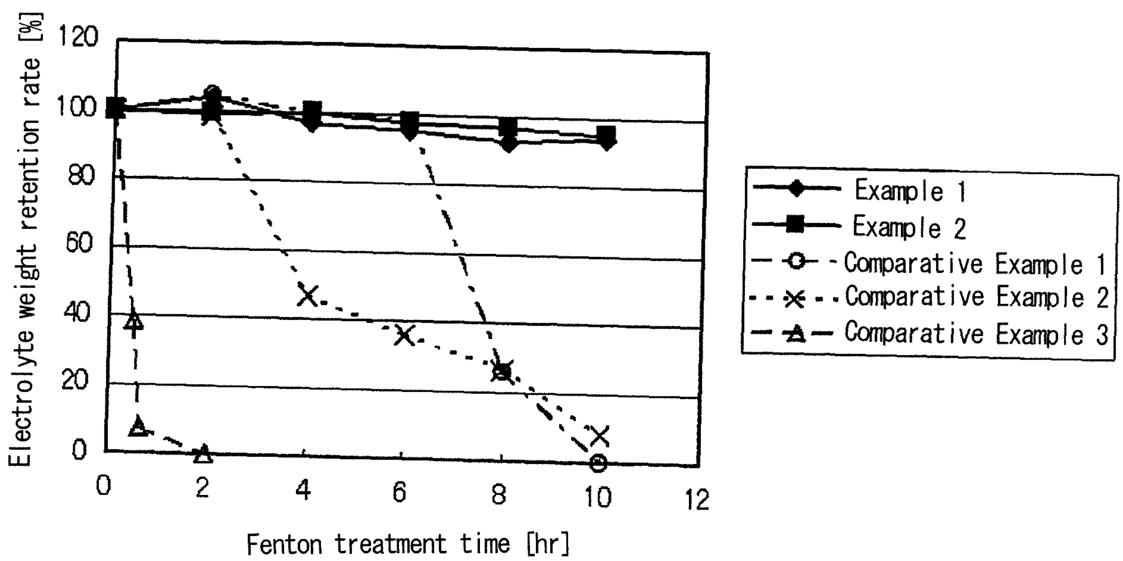
Electrolyte weight retention rate [%]
120
100
80
60
40
20
0
0
2
4
6
8
10
12
Fenton treatment time [hr]
Example 1
Example 2
Comparative Example 1
Comparative Example 2
Comparative Example 3

Fig. 1

**INTERNATIONAL SEARCH REPORT**

International application No. PCT/JP2011/006371

A. CLASSIFICATION OF SUBJECT MATTER
*H01B13/00*(2006.01)i, *C08F259/08*(2006.01)i, *C08J5/22*(2006.01)i, *H01B1/06*(2006.01)i, *H01M8/02*(2006.01)i, *H01M8/10*(2006.01)i

According to International Patent Classification (IPC) or to both national classification and IPC

B. FIELDS SEARCHED

Minimum documentation searched (classification system followed by classification symbols)
H01B13/00, C08F259/08, C08J5/22, H01B1/06, H01M8/02, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2009-206019 A (Japan Atomic Energy Agency), 10 September 2009 (10.09.2009), claims; paragraphs [0026] to [0031]; examples (Family: none) | 8,9<br>1-7 |
| Y<br>A | JP 2008-204857 A (Japan Atomic Energy Agency), 04 September 2008 (04.09.2008), claims; paragraphs [0018] to [0023]; examples & US 2008/0199756 A1 & DE 102008010122 A & CN 101252195 A | 8,9<br>1-7 |
| A | JP 2010-182436 A (Japan Atomic Energy Agency), 19 August 2010 (19.08.2010), entire text & US 2010/0216901 A1 & DE 102010006563 A & CN 101794892 A | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 January, 2012 (24.01.12) | 07 February, 2012 (07.02.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2011/006371

C (Continuation). DOCUMENTS CONSIDERED TO BE RELEVANT

| Category* | Citation of document, with indication, where appropriate, of the relevant passages | Relevant to claim No. |
|---|---|---|
| A | JP 2010-092787 A (Japan Atomic Energy Agency), 22 April 2010 (22.04.2010), entire text (Family: none) | 1-9 |
| A | JP 2007-258048 A (Japan Atomic Energy Agency), 04 October 2007 (04.10.2007), entire text & US 2007/0224480 A1 | 1-9 |
| A | JP 2005-525682 A (Pemeas GmbH), 25 August 2005 (25.08.2005), entire text & US 2005/0175879 A1 & EP 1512190 A & WO 2003/096464 A2 & DE 10220817 A & CA 2485507 A & CN 1729588 A | 1-9 |
| A | JP 57-031935 A (Commissariat a l'Energie Atomique), 20 February 1982 (20.02.1982), entire text & US 4537668 A & EP 42804 A2 & DE 3174304 D & FR 2485395 A & CA 1180520 A | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004059752 A
- JP 2005525682 T
- JP 2004079252 A